# EUROPEAN PATENT APPLICATION

(11) **EP 1 679 923 A1**
(43) Date of publication of application: **12.07.2006**
(21) Application number: 04773619.4
(22) Date of filing: 29.09.2004
(51) Int. Cl.: H04Q 7/38

(54) **CAPACITY SCHEDULING METHOD AND SYSTEM**

(30) Priority: 16.10.2003 JP 2003356936
(71) Applicant: NEC CORPORATION, Minato-ku, Tokyo 108-8001 (JP)
(72) Inventor: LEE, Jinsock, c/o NEC Corporation, Tokyo 108-8001 (JP)
(74) Representative: Vossius & Partner
(86) International application number: PCT/JP2004/014688
(87) International publication number: WO 2005/039229

(57) **Abstract**

Flow capacity controllers (FCC) are provided in each mobile station to compute an uplink capacity for each data flow according to a QoS. A capacity request controller (CRC) changes a capacity request in consideration of the priority level of each data flow and transmits the changed capacity request to the base station. A capacity scheduler (CS) provided in the base station computes an allowable capacity according to the capacity request and transmits the capacity allocation from the base station to the mobile station.

## Description

### TECHNICAL FIELD

The present invention relates to data packet transmission and, in particular, to a closed-loop capacity scheduling method for transmitting an uplink packet from a mobile station to a base station.

### BACKGROUND ART

In a WCDMA system, the uplink capacity of a cell is managed by a distribution scheme, and a mobile station is allowed to transmit up to a maximum capacity controlled by a wireless network controller. The management of uplink noise rise is carried out by the slow statistical multiplexing control in which the wireless network controller controls the maximum transmission rate of the mobile station. Accordingly, the noise rise varies significantly, whereby a large noise rise margin is required. This induces loss of the uplink capacity. According to the WCDMA priority processing, a data packet with higher priority is transmitted prior to a data packet with lower priority.

The 3GPP has proposed, as a sister technology of HSDPA, capacity scheduling on the basis of closed-loop base. See, for example, "TR25.896 V1.0.0, Feasibility Study for Enhanced Uplink for UTRA FDD". The uplink capacity scheduling is studied in "Enhanced Uplink R6 Study Item". According to this system, fast uplink scheduling in a base station is applied and, at the same time, the mobile station packet transmission is controlled by limiting the mobile stations transmitting packets so as to reduce variation in noise rise of the cells. In order to manage the overall noise rise, a capacity scheduler controls the uplink transmission power, transmission rate, and timing of the mobile station.

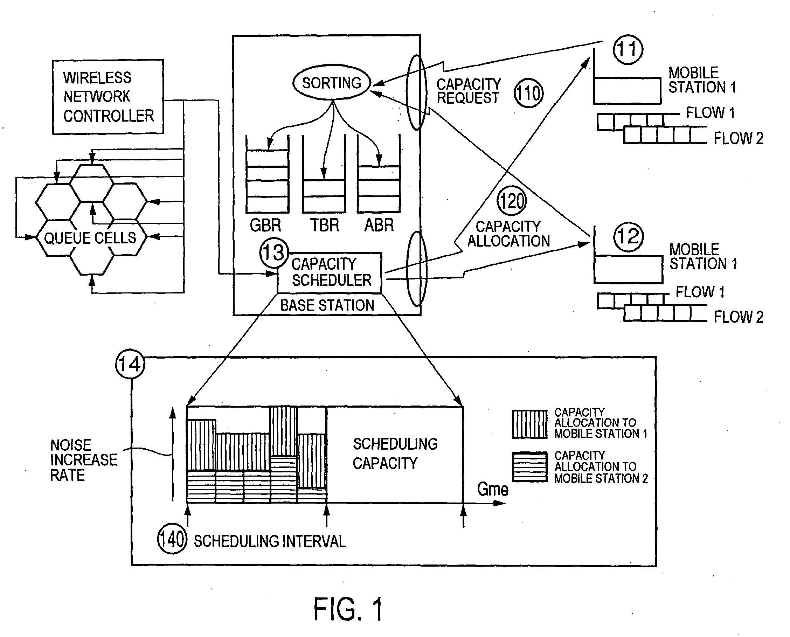

As shown in Fig. 1, a base station 13 controls the uplink transmission capacity of mobile stations 11 and 12 by exchanging a capacity request 110 in the uplink and a capacity allocation 120 in the downlink. The term "capacity scheduling" means that the transmission rate and transmission time are controlled for mobile stations transmitting data packets by using a common uplink capacity 14. Scheduling timing 140 is a timing at which the capacity scheduling is determined, and this determination is valid until the next scheduling timing. The mobile stations perform transmission at an allowed transmission rate within the scheduling interval.

It is therefore a first object of the present invention to provide capacity scheduling capable of utilizing the system capacity to a maximum extent by limiting the uplink noise rise at large.

In the uplink packet scheduling, it is very important to discriminate packet transmissions based on traffic classes. For example, with reference to Fig. 1, consideration is given to the mobile station 1 using a stream service having a compensated bit rate traffic class 11 and requiring a minimum compensated capacity, and to the mobile station 2 using a best effort type service having an available bit rate traffic class 12 and not requiring any specific QoS.

When these two QoS traffic classes are present in a cell, a capacity scheduler 13 should utilize the system throughput to the maximum extent possible while, at the same time, effectively utilizing the uplink capacity in such a manner that the QoS is satisfied for each of the traffic classes.

It is therefore a second object of the present invention to provide capacity scheduling for supporting transmission of a plurality of QoS packets.

It is also very important for the uplink packet scheduling that means are provided for discriminating packet transmissions based on priority classes. For example, in Fig. 1, it is assumed that a business user 11 who pays a special membership fee is supposed to be treated with a higher priority than a home user 12 who is rather economy-conscious. When a plurality of priory levels coexist in a network in this manner, the capacity should be utilized effectively such that the capacity is allocated to a packet transmission with higher priority prior to a packet transmission with lower priority.

It is therefore a third object of the present invention to provide capacity scheduling for supporting packet transmissions having a plurality of priority levels.

Further, it is also very important for the uplink packet scheduling that means are provided for multiplexing a plurality of data packet transmissions. For example, in Fig. 1, the user 11 of the mobile station 1 may use a stream service to communicate with a colleague while downloading a file through the Internet. In this case, the respective data packet transmissions have different traffic classes and different priority levels, and hence data packet transmissions having a plurality of QoSs and a plurality of priority levels coexist within the network. The capacity scheduling 13 in Fig. 1 should differentiate the transmissions based on the priority levels and at the same time should allocate the capacity so as to satisfy the respective QoSs of the data packet transmissions.

It is therefore a fourth object of the present invention to provide capacity scheduling for supporting packet transmissions having a plurality of QoSs and a plurality of priority levels.

Further, in the uplink packet scheduling, if the capacity scheduling is fast enough to follow the change in the wireless channel environment, wireless resources can be utilized effectively. This is made possible by performing the scheduling at a place closer to wireless channels. Improvement in capacity can be achieved by flattening quick variation in uplink noise rise so as to reduce the noise rise margin. The uplink packet scheduling at the base station should be performed to maintain a higher system throughput while considering the plurality of QoSs and the plurality of priority levels in the network.

It is therefore a fifth object of the present invention to provide capacity scheduling capable of utilizing the system capacity to the maximum extent possible while supporting the plurality of QoSs and the plurality of priority levels.

### DISCLOSURE OF THE INVENTION

According to a first aspect of the invention, provided is a method for supporting closed-loop capacity scheduling between a base station and a mobile station. The method includes the steps of applying flows to respective flow capacity controllers (FCC) in the mobile station; selecting a traffic class from among a plurality of mutually different QoS traffic classes which are prepared in the mobile station, as a selected traffic class; and the mobile station allocating priority levels to the respective flows in consideration of the selected traffic class in order to transmit different QoS traffic classes.

According to a second aspect of the present invention, the method further comprises the step in which the FCCs in the mobile station compute uplink capacity requests for the respective flows based on the selected traffic class.

According to a third aspect of the present invention, the method further includes the steps in which: a capacity request controller (CRC) changes the capacity request for each of the flows with the use of the priority level, the selected traffic class, and the uplink transmission power; and the changed capacity request for each of the flows is transmitted from the mobile station to the base station.

According to a fourth aspect of the present invention, the method further includes the steps in which: the base station receives the changed capacity request; a capacity scheduler (CS) in the base station computes an allowable capacity for each of the flows with the use of the changed capacity request; and capacity allocation indicating the allowable capacity for each of the flows is transmitted from the base station to the mobile station.

According to a fifth aspect of the present invention, the method further includes the steps in which: a capacity allocation controller (CAC) in the mobile station receives the capacity allocation; the capacity allocation received by the CAC is changed with the use of the selected traffic class and the uplink transmission power to generate a changed allocated capacity; and the FCC updates the allowable capacity with the use of the changed allocated capacity.

According to a sixth aspect of the present invention, provided is a system for supporting closed-loop capacity scheduling between a mobile station and a base station. The mobile station is capable of selecting a QoS traffic class from a plurality of QoS traffic classes and includes: a flow capacity controller (FCC) for computing a requested uplink capacity for each of data flows specified by a selected QoS traffic class; a capacity request controller (CRC) for changing the requested uplink capacity so as to generate a changed capacity request indicating a changed capacity; and means for transmitting the changed capacity request from the mobile station to the base station.

According to a seventh aspect of the present invention, the mobile station further includes: a capacity allocation controller (CAC) for changing the received allocated capacity based on an uplink transmission power; and an FCC for updating the allowed capacity with the use of the changed allocated capacity.

According an eighth aspect of the present invention, the base station further includes: reception means for receiving the changed capacity request; and a capacity scheduler for computing an allowable capacity for each of the flows with the use of the changed capacity request, the selected traffic class, and the priority level transmitted from the mobile station.

According to ninth aspect of the present invention, provide is a method for managing uplink capacities for a plurality of uplink data flows in a base station. The method includes comprising the steps of: the base station computing a schedulable uplink capacity indicating a difference between a maximum uplink capacity and a non-schedulable uplink capacity; receiving a capacity request transmitted from the mobile station; computing a minimum QoS capacity for each flow based on the priority level allocated to the flow so as to satisfy a minimum QoS request; and allocating the minimum QoS to each of the flows.

According to a tenth aspect of the present invention, the method further includes the steps of: computing an additional requested capacity for each of the flows so that the available and schedulable uplink capacity that remains after the allocation of the minimum QoS capacity is utilized to the maximum extent possible; and allocating the remaining capacity to each of the flows having the additional requested capacity.

According to a specific aspect of the present invention, provided is a method for supporting closed-loop capacity scheduling between a base station and a plurality of mobile stations. The method comprises the steps in which:
1. respective flows are inputted to flow capacity controllers (FCC) according to traffic classes of the flows and initial values of priority and capacity are allocated to the flows;
2. each of the mobile station stores a data packet belonging to each data flow in an allocated data packet queue;
3. a flow capacity controller in each mobile station computes a requested uplink capacity for each data flow based on the requested service quality;
4. a capacity request controller (CRC) changes the capacity request for the data flow set by using the allocated priority, and transmits the changed capacity request from the mobile station to the base station;
5. the base station receives capacity requests transmitted from the plurality of mobile stations and computes a retransmitted data packet after receiving data packets transmitted from the plurality of mobile stations;
6. a capacity scheduler in the base station computes an allowable capacity for each flow with the use of the allocated QoS traffic class, the allocated priority class, and the received capacity request;
7. the base station transmits a capacity allocation, and the capacity allocation controller changes the received allocated capacities for the data flow set with the use of the allocated priority levels; and
8. the flow capacity controller updates the allowed capacity with the use of the changed allocated capacities for the data flows in the set.

According to another aspect of the present invention, a subsystem is used in a system managing the uplink capacity for scheduling an uplink capacity for a plurality of uplink data flows in a base station. The system includes the steps in which:
1. the base station evaluates a schedulable uplink capacity, the schedulable uplink capacity being a difference between a maximum uplink capacity and a non-schedulable uplink capacity;
2. the capacity request is received and processed by the method described above;
3. a requested capacity for retransmitted packet is computed and allocated based on the previous reception state of the data packet transmission;
4. minimum QoS capacities for the flows in the set (particularly, the minimum QoS capacities denote a compensated capacity, a minimum capacity, and a requested capacity for the GBR, ABR, and TBR, respectively) for satisfying the minimum QoS request;
5. the minimum QoS capacities are allocated to the flows in the set based on the allocated priority levels;
6. additional requested capacities in the flow set (the additional requested capacities denote capacities equal to or larger than the compensated capacity and the minimum capacity for the GBR and ABR, respectively) so that the available and schedulable uplink capacity remaining after allocation of the retransmission and minimum QoS capacities is utilized to the maximum extent possible; and
7. the remaining capacity is allocated to the flows in the set having additional requested capacities based on the allocated priority levels (particularly, the capacity is allocated to the higher priority flows prior to the lower priority flows, the remaining capacity being preferably allocated in proportion to the priority levels); and
8. the total capacity for the flows is computed by using the retransmission, minimum QoS and remaining capacities and transmitted to the mobile station.

According to another aspect of the present invention, provided is a method for managing the uplink capacity flow capacity controller in the mobile station. The method includes the steps of:
1. allocating QoS parameters to the flows in the set with the use of traffic classes (the QoS traffic classes preferably includes a compensated bit rate, target bit rate, and available bit rate traffic classes, and the requested QoS parameters preferably include a maximum capacity, a minimum capacity, a target capacity, and a compensated capacity);
2. computing retransmission capacities for the flows in the set;
3. computing a requested capacity for a new data packet transmission so as to satisfy the QoS request; and
4. computing a capacity request for the uplink capacity scheduler.

According to another aspect of the present invention, provided is a method for signaling a capacity request and an allocation message, the method comprising the steps of:
1. generating a capacity request message containing a capacity request and a flow ID for each flow in the flow set (the capacity request message is preferably encoded by the mobile station and decoded by the base station);
2. transmitting the capacity request messages from the mobile station and receiving the same at the base station (the capacity request messages are preferably transmitted via respective individual uplink channels),
3. generating a capacity allocation message containing the capacity allocation and the flow ID for each flow in the set (the capacity allocation message is preferably encoded by the base station and decoded by the mobile station); and
4. transmitting the capacity allocation messages from the base station and receiving the same at the mobile station (the capacity allocation messages are preferably transmitted via respective individual downlink control channels).

A first advantage of the present invention is to enable the base station to perform uplink capacity scheduling while taking QoSs and priority levels into consideration. In comparison with a conventional system in which capacities of uplink data flows are roughly controlled by the control of a maximum capacity of a mobile station, the base station according to the present invention is able to process both the priority levels and QoSs of the data flows and thus the base station is able to take into consideration both the QoS and the priority level of each flow.

A second advantage of the present invention is that both of the mobile station and the base station recognize not only the priority level but also the QoS of each data flow. According to a currently available rate allocation method in WCDMA, only the priority levels are taken into account when uplink capacity is distributed among a plurality of uplink data flows. In contrast, according to the present invention, requested flow capacity can be divided into a minimum QoS capacity and the remaining capacity. Thus, the minimum QoS capacity for a data flow of lower priority is compensated prior to the additional QoS capacity for a data flow of higher priority.

A third advantage of the present invention is that the capacity request and the capacity allocation can be adjusted by the mobile station taking into consideration the QoS and the priority level of each data flow. The adjustment of the capacity requests is very important when the total of the requested capacities is not enough in a predetermined uplink transmission power. The adjustment of the capacity allocation is required when scheduling delay occurs. The present invention proposes adjustment taking the QoSs and the priority levels into consideration, whereby the additional capacity for a flow with a lower priority is adjusted prior to the minimum QoS capacity having a higher priority.

### BRIEF DESCRIPTION OF THE DRAWINGS

Fig. 1 is a diagram for explaining uplink capacity control performed by a base station to a mobile station;
Fig. 2 is a typical schematic diagram illustrating capacity scheduling for supporting processing of a plurality of QoS traffic classes and priority levels;
Fig. 3 is a flowchart illustrating a typical flow capacity controller;
Fig. 4 is a flowchart of a flow capacity controller for the GBR traffic class;
Fig. 5 is a flowchart illustrating a flow capacity controller for the TBR traffic class;
Fig. 6 shows a typical flowchart of a capacity scheduler, and is a diagram for explaining hierarchical capacity allocation for supporting a plurality of QoSs and a plurality of flows with different priority levels; and
Fig. 7 is a diagram illustrating a system configuration having a plurality of mobile stations and a single base station, including uplink and downlink channels used in a second embodiment.

### BEST MODE FOR CARRYING OUT THE INVENTION

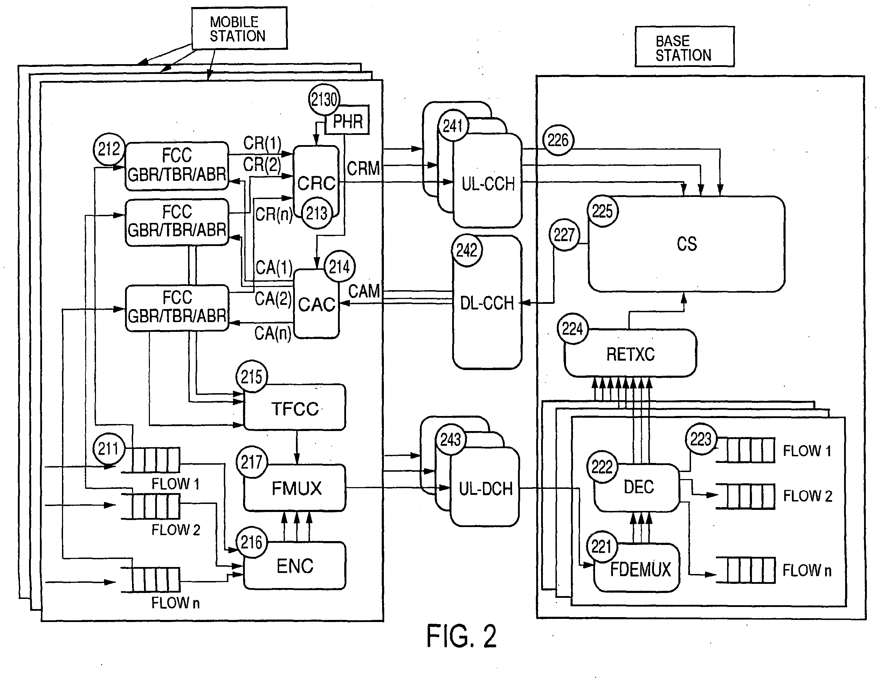

The present invention is for maintaining closed-loop uplink capacity scheduling within a cell. Fig. 2 shows a system configuration having a plurality of mobile stations and a single base station, including uplink and downlink channels. Each of the mobile stations has flow capacity controllers (FCCs), a capacity request controller (CRC), flow queues, a TFC controller (TFCC), a flow multiplexer (FMUX), and an encoder (ENC). The base station has a capacity scheduler (CS), a decoder (DEC), a flow demultiplexer (FDEMUX), and flow queues.

In each mobile station, a data packet transmitted via uplink is stored in an uplink data flow queue 211 shown in Fig. 2. A flow capacity controller (FCC) 212 is always attached to the flow queue. The FCC holds information on QoS parameters, a unique ID number, and a queue size of the flow queue.

A wireless network controller preferably sets an initial capacity when establishing a new data flow. The initial capacity is conveyed to the FCC by means of a signal. The FCC computes a requested uplink capacity for the data flow based on a requested QoS for the flow, and generates a capacity request (CR). The CR is then sent to the capacity request controller (CRC) 213. The CRC checks a residual amount 2130 of currently available transmission power and computes a total storable uplink capacity in the system shown in Fig. 2.

When the total amount of capacity requests from the FCCs connected to the CRC is larger than the storable uplink capacity, the CRC reduces the amount of CR in the order of priority from the lowest priority flow to the highest priority flow. After the CR is multiplexed by the CRC, the CRM is transmitted to an uplink capacity scheduler 221 in the base station. A determination by the scheduler is transmitted to the mobile station as a capacity allocation message (CAM) indicating an uplink capacity allowed to each data flow. The CAM is received by a capacity allocation controller (CAC) 214 and is separated by the same. The separated CAMs are input to the respective FCCs. The CAC computes a supportable uplink capacity based on the residual amount of available transmission power. If the total amount of the CAMs received is larger than the amount of storable uplink capacity, the CAC reduces the CAMs in the order of priority from the lowest priority flow to the highest priority flow.

According to this method, the FCCs independently execute closed-loop control on the CAMs and CRMs processed by the capacity scheduler.

In the mobile station, the uplink data transmission is implemented by the method as described below. A TFC controller (TFCC) 215 computes a combination of transport formats by using a method of collecting the flow capacities allocated to the data flows and transmitting a data packet up to the flow capacity allocated to each flow. The TFCC 215 also transmits a TFCI (Transport Format Combination Indicator) to the base station. Once a TFCI is selected, the data packets from the flow queues are encoded by an ENC 216 and multiplexed by an FMUX 217. The TFCI is added o the multiplexed data packets and sent to the uplink traffic channel.

In the base station, the uplink data reception is implemented by the method as described below. A flow demultiplexer (FDEMUX) 221 separates a received bit stream into separated sub bit streams, and the separated sub bit streams are separately decoded by a DEC 222. Data packets successfully decoded are stored in separate flow queues 223. The DEC 222 reports the decoding state of the data packets to a retransmission controller (RETXC), and the RETXC transmits the reported decoding state to an uplink capacity scheduler 225.

In the base station, the CRM from the mobile station is received (226) and provided to a capacity scheduler (CS) 225. The CS 225 generates a CAM which is transmitted to the mobile station (227).

The CRMs are transmitted from the mobile stations to the base station through the uplink control channels 241. Each of the CRMs contains a requested capacity and an FID of each flow. Preferably, the CRM is encoded in the mobile station and decoded in the base station. The mobile station desirably transmits a report on a current residual amount of transmission power. The mobile stations preferably use separate UL control channels for transmission.

The CAMs are transmitted from the base station to the mobile stations through a downlink air interface 242. Each CAM contains an allowed capacity and an FID of each flow. The CAMs are preferably encoded in the base station and decoded in the mobile stations. The base station preferably uses a common downlink control channel for transmission to the mobile stations from which the CAMs are received.

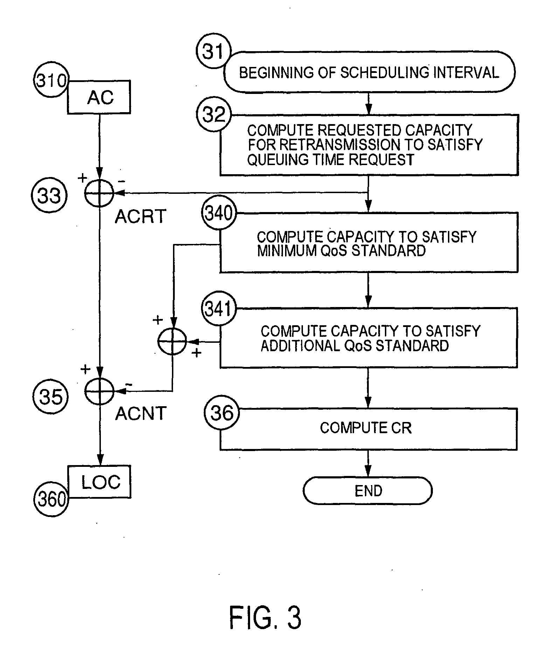

A typical configuration of the flow capacity controller is shown in Fig. 3. While detailed implementation of the controller depends on a traffic class of a flow, Fig. 3 illustrates principal processing steps common to all the traffic classes. The FCC is activated at least at the same timing as the scheduling interval 31 in Fig. 3. Input parameters of the FCC consist of a capacity currently allocated (AC) to the flow, a requested capacity for retransmission (RCR), and QoS parameters of the flow. Each traffic class preferably has a set of QoS parameters. Output parameters of the FCC consist of an allocated capacity for retransmission (ACRT), an allocated capacity for new transmission (ACNT), and a capacity request (CR). In the first step, the FCC computes a requested capacity for retransmission for satisfying requested delay 32, 33 of the packet data in Fig. 3. The requested delay is preferably set tightly so that the FCC is able to allocate as much capacity required as possible to retransmission. In the next step, the FCC computes a requested capacity for new data transmission including both a minimum QoS capacity and an additional QoS capacity of the flow indicated by the reference numerals 340, 341 and 35 in Fig. 3. A left-over capacity (LOL) 360 in Fig. 3 corresponds to a difference between AC and the total of ACRT and ACNT. In the final step, the FCC computes the CR to determine whether or not additional capacity is required for the next scheduling interval.

GBR traffic class is a traffic class in which capacity is compensated to a predetermined level by the scheduler. The GBR traffic class has QoS parameters consisting of a maximum capacity (MC) and a compensated capacity (GC). "GC" means a minimum compensated capacity whereas "MC" means an upper limit of allowable capacity. The scheduler allocates more capacity than GC based on the availability ratio of the uplink capacity.

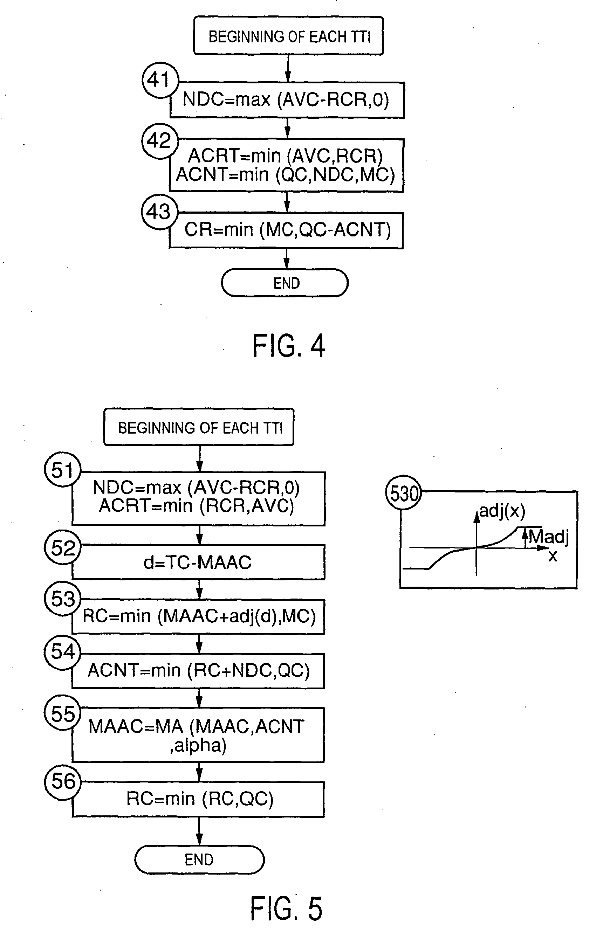

Fig. 4 illustrates the performance of the FCC relating to the GBR traffic class. The GBR traffic class has QoS parameters of a maximum capacity (MC) and a compensated capacity (GC). Retransmitted data has higher priority than newly transmitted data. Accordingly, AC is allocated to the retransmitted data, and then the left-over capacity is allocated to the data (41, 42). The capacity allocation to newly transmitted data is performed such that the lower limit is set to either the current flow queue size (QC) or a capacity available for new transmission (NDC) while the upper limit is set to the maximum capacity that is one of the QoS parameters. It is therefore obvious that LOC becomes a positive value only when NDC is larger than MC, or QC is smaller than NDC. Finally, a capacity request (CR) is computed by comparing the maximum capacity (MC) and the remaining flow queue size (QC-ACNT) (43 in Fig. 4).

ABR traffic class is a traffic class whose capacity is allocated based on an available capacity ratio. The ABR traffic class has QoS parameters consisting of a maximum capacity (MC) and a minimum capacity (MNC). The MNC is a minimum necessary capacity for transmitting a small data packet such as TCP and TCK at an arbitrary timing, while the MC is an upper limit of allowable capacity.

The implementation method of ABR FCC is the same as that of GBR FCC in which the compensated capacity (GC) as the QoS parameter is set to zero. In this case, since no QoS is requested to the capacity scheduler, the capacity scheduler is able to allocate as much capacity as possible. The CS preferably allocates at least the MNC for transmitting a small data packet at an arbitrary timing.

TBR traffic class is a traffic class whose capacity is managed by a target level. The TBR traffic class has QoS parameters consisting of a maximum capacity (MC) and a target capacity (TC). The FCC controls instantaneous capacities such that an average capacity becomes the target capacity, while setting the MC to an upper limit of allowable capacity.

Fig. 5 illustrates an example of implementation of the TBR FCC. Retransmitted data has higher priority than newly transmitted data. Accordingly, AC is first allocated to the retransmitted data, and then the remaining capacity is allocated to the newly transmitted data (51 in Fig. 5). For the allocation to new transmission, a difference between a current moving average of the allocated capacities (MAAC) and the TC is first computed (52). A requested capacity (53, 530) satisfying the TC is then computed. The capacity allocation is then performed such that the allocated capacity (ACNT) will not exceed the MC or the queue size (QC) in 54. The MAAC is updated by obtaining a moving average with the use of the newly computed ACNTs (55), and finally the capacity request (CR) is computed so as to satisfy the TC (56). An exponential adjustment and control may be used for increasing the convergence rate (530).

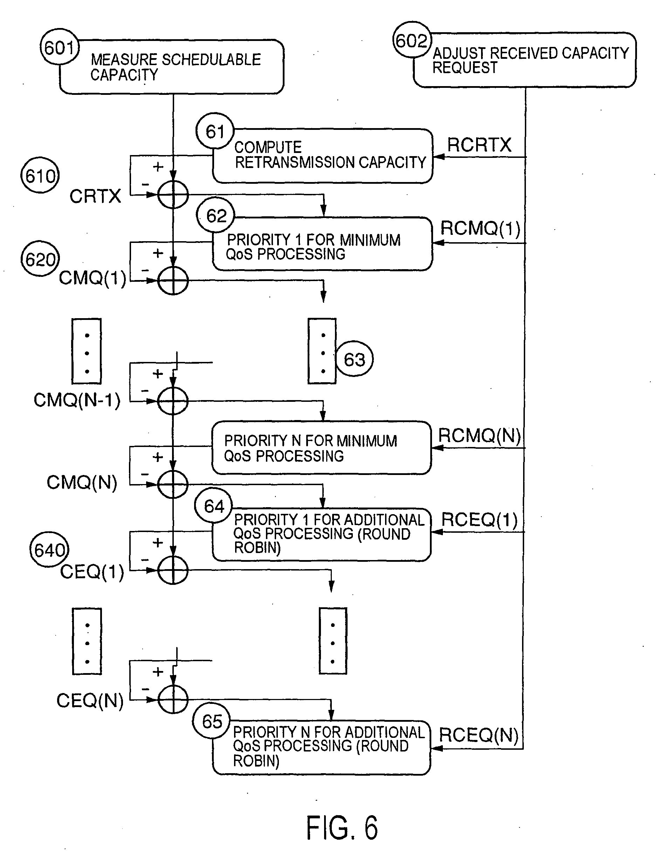

Fig. 6 illustrates an example of implementation of the uplink capacity scheduler. As shown in Fig. 6, the base station measures a non-schedulable uplink capacity including thermal noise, inter-cell interference, and non-schedulable data transmission at the beginning of a scheduling interval (601). The non-schedulable data transmission is background load that is not controlled by the scheduler. The CS then computes an available and schedulable capacity that is a difference between the maximum capacity and the non-schedulable capacity.

Upon receiving a capacity request from a mobile station, the base station performs adjustment of the capacity request in a manner as illustrated in 602 of Fig. 6. After allocating a minimum value of allowed transmission power headroom to the mobile stations, the base station computes a supportable maximum capacity for each of the mobile stations. The minimum value of allowed transmission power headroom controls interference to other cells in the network. A maximum capacity supportable at a certain minimum value of allowed transmission power headroom is compared with a total value of requested capacities. The additional QoS capacity portion of the capacity request is reduced successively in the order of priority from the lowest priority flow to the highest priority flow so that the supportable maximum capacity is greater than the total value of the requested capacities. If the reduction is not enough yet, the minimum QoS capacity portion of the capacity request is reduced successively from the lowest priority flow to the highest priority flow. If the reduction is not enough yet, then the retransmission portion of the requested capacity is reduced successively from the lowest priority flow to the highest priority flow. The base station computes a requested retransmission capacity (RCRTX), a minimum QoS capacity for each priority level (RCMQ(1) to RCMQ(N)), and a total amount of additional QoS capacities for all the mobile stations(RCEQ(1) to RCEQ(N)). The base station also computes a retransmission capacity, a minimum QoS capacity and an additional QoS capacity for each flow of each mobile station, with the use of the flow information and the reported capacity request.

As shown in Fig. 6, the base station first allocates a schedulable capacity to the retransmission capacity 61 so that the total value of the allocated capacities supposed to be smaller than the total schedulable capacity is smaller than the total schedulable capacity. If the total schedulable capacity is not enough to satisfy the total value of the requested retransmission capacities, the base station allocates a retransmission capacity successively in the order of priority from the highest priority flow to the lowest priority flow. If the total schedulable capacity is enough to satisfy the total value of the requested retransmission capacities, the base station allocates the remaining schedulable capacity to the minimum QoS capacities of the flows from the highest priority flow 62 to the lowest priority flow 63 in Fig. 6. If the schedulable capacity remains still enough, the base station allocates the remaining schedulable capacity to the additional QoS capacities of the flows from the highest priority flow 64 to the lowest priority flow 65 in Fig. 6. It is preferable that the capacity is distributed among the flows belonging to the same priority level by a fair scheduling method. Finally, the base station computes the total allocated capacity, for each flow of each mobile station, that is obtained by adding the allocated retransmission capacity, the allocated minimum QoS capacity, and the allocated additional QoS capacity.

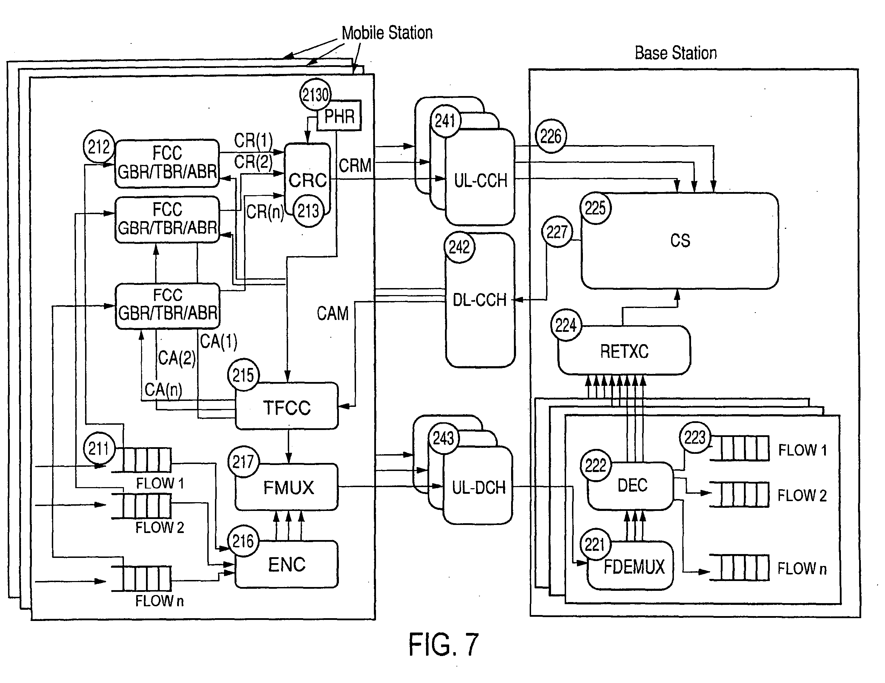

A second embodiment of the present invention will now be described with reference to Fig. 7.

Fig. 7 illustrates system configuration having a plurality of mobile stations and a single base station, and including uplink and downlink channels used in the second embodiment.

The system configuration in Fig. 7 is different from that of the first embodiment shown in Fig. 2 in that the CAC in Fig. 2 is not provided herein. Instead, according to the system configuration of the second embodiment, a CAM transmitted by the base station is received by a TFCC 215. The CAM indicates a total allocated capacity allocated to the mobile stations, and the TFCC selects a combination of transport formats such that the capacity is less than the total allocated capacity and the power is less than the maximum power of the mobile station. The TFCC determines the combination of transport formats so that t the requested quality for a flow with higher priority is satisfied prior to a flow with lower priority. Thereafter, the TFCC transmits a TFCI indicating the selected combination of transport formats to the base station while transmitting information relating to the selected combination of transport formats to the FCCs.

Each of the FCCs retrieves information on the capacities allocated to the respective data flows from the information on the selected combination of transport formats, and computes an uplink capacity requested for each data flow on the basis of the QoS requested for the flow to generate a capacity request (CR). The CR is then transmitted to the CRC, multiplexed in similar processing steps to those of the first embodiment, and transmitted to a capacity scheduler (CS) provided in the base station as a capacity request message (CRM).

The CS of the second embodiment computes a capacity allocated to each flow in the same processing steps as the CS of the first embodiment described above with reference to Fig. 6. The CS of the second embodiment then computes the total of the computed capacities allocated to the flows (the total allocated capacity) and transmits a capacity allocation message (CAM) indicating the total allocated capacity to the mobile stations through the downlink.

The second embodiment is different from the first embodiment in the respects as described above. The other respects are similar to the first embodiment and hence the description thereof will be omitted.

## Claims

1. A method of providing closed-loop capacity scheduling between a base station and a mobile station, comprising the steps of:
inputting respective flows to capacity controllers (FCC) in the mobile station;
selecting a traffic class from a plurality of QoS traffic classes; and
allocating priority levels to the respective flows in consideration of the selected traffic class in order to transmit different QoS traffic classes.

2. The method as claimed in claim 1, further comprising the step in which the FCCs in the mobile station compute uplink capacity requests for the respective flows based on the selected traffic class.

3. The method as claimed in claim 2, further comprising the steps in which:
a capacity request controller (CRC) changes the capacity request for each of the flows with the use of the priority level, the selected traffic class, and the uplink transmission power; and
the changed capacity request for each of the flows is transmitted from the mobile station to the base station.

4. The method as claimed in claim 3, further comprising the steps in which:
the base station receives the changed capacity request;
a capacity scheduler (CS) of the base station computes an allowable capacity for each of the flows with the use of the changed capacity request; and
capacity allocation indicating the allowable capacity for each of the flows is transmitted from the base station to the mobile station.

5. The method as claimed in claim 3, further comprising the steps in which:
the base station receives the changed capacity request;
the CS of the base station computes an allowable capacity for each of the flows with the use of the changed capacity request;
a total value of the allowable capacities for the flows (the total allowable capacity) is computed for each of the mobile stations; and
capacity allocation indicating the total allowable capacity for each of the mobile station is transmitted from the base station to the mobile station.

6. The method as claimed in claim 4, further comprising the steps in which:
a capacity allocation controller (CAC) in the mobile station receives the capacity allocation;
the capacity allocation received by the CAC is changed with the use of the selected traffic class and the uplink transmission power to generate a changed allocated capacity; and
each of the FCCs updates the allowable capacity with the use of the changed allocated capacity.

7. The method as claimed in claim 5, further comprising the steps in which:
a transport format combination controller (TFCC) in the mobile station receives the capacity allocations,
the TFCC selects a combination of transport formats according to the capacity allocations; and
each of the FCC computes a capacity request for each flow according to the selected combination of transport formats.

8. A system for providing closed-loop capacity scheduling between a mobile station and a base station, capable of selecting a QoS traffic class from a plurality of QoS traffic classes, the system comprising:
a flow capacity controller (FCC) for computing a requested uplink capacity for each data flow specified by a selected QoS traffic class;
a capacity request controller (CRC) for changing the requested uplink capacity so as to generate a changed capacity request indicating a changed capacity; and
means for transmitting the changed capacity request from the mobile station to the base station.

9. The system as claimed in claim 8, wherein the mobile station further comprises:
a capacity allocation controller (CAC) changing the allocated capacity transmitted from the base station based on an uplink transmission power; and
an FCC for updating the allowed capacity with the use of the changed allocated capacity.

10. The system as claimed in claim 8, wherein the mobile station further comprises:
a TFCC for selecting a combination of transport formats according to the capacity allocation transmitted from the base station; and
an FCC for computing a capacity request for each of the flows with the use of the selected combination of transport formats.

11. The system as claimed in claim 8 or 9, wherein the base station comprises:
reception means for receiving the changed capacity request; and
a capacity scheduler for computing an allowable capacity for each of the flows with the use of the changed capacity request, the selected traffic class, and the priority level transmitted from the mobile station.

12. A method of managing uplink capacities for a plurality of uplink data flows in a base station, the method comprising the steps of:
computing a schedulable uplink capacity indicating a difference between a maximum uplink capacity and a non-schedulable uplink capacity;
receiving a capacity request transmitted from the mobile station;
computing a minimum QoS capacity that satisfies a minimum QoS request; and
allocating a capacity to each of the flows in consideration of the priority level and the minimum QoS capacity allocated to the flow.

13. The method as claimed in claim 12, further comprising the steps of:
computing an additional requested capacity to each of the flows so that the available and schedulable uplink capacity that remains after the allocation of the minimum QoS capacity is utilized to the maximum extent possible; and
allocating the remaining capacity to each of the flows having the additional requested capacities.
